# EUROPEAN PATENT APPLICATION

(11) **EP 4 446 289 A1**
(43) Date of publication of application: **16.10.2024**
(21) Application number: 23167827.7
(22) Date of filing: 13.04.2023
(51) Int. Cl.: C03C 3/066, C03C 3/091, C03C 3/093, C03C 8/04, C03C 8/06, C03C 10/00, C03C 17/04, C03C 8/02

(54) **GLASS-CERAMIC FRIT COMPOSITIONS FOR ENAMEL COATINGS**

(71) Applicant: SCHOTT AG, 55122 Mainz (DE)
(72) Inventor: Hovhannisyan, Martun, 63150 Heusenstamm (DE); Krechel, Ricarda, 55576 Sprendlingen (DE); Menke-Berg, Yvonne, 65197 Wiesbaden (DE); Nass, Peter, 55120 Mainz (DE)
(74) Representative: Fuchs Patentanwälte Partnerschaft mbB

(57) **Abstract**

The present invention relates to colored glass-ceramic frits, pigments or coloring additives and methods of producing such materials. The resulting compositions can be used to form enamels to decorate and/or protect a substrate. Such crystallizing glass and glass-ceramic materials are suitable for different home appliance or automotive applications.

## Description

The present invention relates to colored glass-ceramic frits, pigments or coloring additives and methods of producing such materials. The resulting compositions can be used to form enamels to decorate and/or protect a substrate. Such crystallizing glass and glass-ceramic materials are suitable for different home appliance or automotive applications.

In particular, the present invention relates to a colored crystallizing glass and glass-ceramic frit compositions for use in decoration enamels, coating and sealing articles (or, applications) and a method of producing the same. The crystallizing glass and glass-ceramic compositions, during ceramization process, provide controllable (or, adjustable) residual glass and crystal phases. The crystal phases can include crystallites of an Ilmenite solid solution, for example referred to as a Fe₂O₃-TiO₂-MnO₂ system. The softening temperature of such glass-ceramics can be changed in a broad range from 500 to 1000°C which displays good flowing behavior or high temperature stability at traditional decoration firing temperatures. Another aspect of the invention is that the crystal size of glass-ceramics can be adjusted in a broad range as well, in particular in a range of from 0.05 µm to 5 µm.

Depending on crystal size (nm, µm) within the glass or glass-ceramic the transmission can be changed, in particular from 1% to < 8% or even < 1% at 380 to 740 nm and Haze from 5 to < 100 (in particular at a sample thickness between 0.5 and 25 µm, more preferred between 0.5 and 10 µm, more preferred between 0.5 and 8 µm). The thickness may in particular be the thickness of an enamel layer.

In order to create a glass frit with a higher optical density (in particular > 2) crystal size is preferred >0.05 µm and/or < 10 µm, for example from 0.1 to 7.5 µm, from 0.2 to 5.0 µm, or from 0.5 to 3.5 µm. The crystal size may for example be >0.05 µm such as at least 0.1 µm, at least 0.2 µm or at least 0.5 µm. The crystal size may for example be at most 10 µm such as at most 7.5 µm, at most 5.0 µm or at most 3.5 µm.

Glass or glass-ceramic of the invention exhibit good chemical durability against acids and base chemicals.

The resulting compositions can be used as frits, pigments and/or coloring additives.

### Background

Colored glass frits or crystallizing glass frit compositions are known in the art. However, there are difficulties and drawbacks associated with state of the art:
For instance, JP 2001-89189 A discloses a ceramic color composition using (Fe,Mn)₂O₃ of a Bixbyite structure as a heat-resistant pigment powder. However, a ceramic color layer-attached glass plate using such a ceramic color composition had a problem such that the sinterability of the ceramic color layer is low, or the ceramic color layer looks whitish as observed through the glass plate from the side on which no ceramic color layer is fired.

US 5,710,081 A discloses and claims a particular black glass frit made by a process in which a metal-oxide-containing glass melt is contacted with reducing agent. In the process of this patent, metal-oxide forming glass raw materials (including iron oxide at a concentration of from 0.5 to 3.0 weight percent) and sulfur are melted at a temperature of from 1000°C to 1200°C in a reducing gas atmosphere to form a melt; and the melt is then quenched to form a frit. The glass made by the process of this invention is not strongly absorbing and does not create an intense color when applied as thin films (i.e., films less than 30 µm, preferably less than 20 µm, and more preferably less than 10 µm). The process described in US 5,710,081 A reduces iron oxide to iron sulfide in the melt in a reducing atmosphere, but the colored pigments which are formed in such process tend to precipitate out of the melt; and the frit that is formed from such glass melt thus has a relatively low concentration of the colored pigments and relatively poor optical properties.

JP 2003-183047 A describes a red colored glass which is afterwards converted into a red colored glass-ceramic. The inventor states that it is difficult to maintain the red color in the desired shade during the conversion of the glass into glass-ceramic. A special glass composition with at least one oxide of a bivalent metal and Bi₂O₃ is proposed. This sort of colored glass may be converted into a glass ceramic while maintaining its color shade.

Glass composition according to EP 0 482 535 B1 having coloring constituents based on FeO, selenium and CoO is only grey, but not black.

WO 2020/256887 A1 relates to Pb-free colored glass frits containing transition metal oxides such as Fe₂O₃, MnO₂, Cr₂O₃ and Co₃O₄.

US 2002/0197408 A1 relates to a process of manufacturing recyclable black enamel which contains at least zinc, in which process a glass forming material comprising at least bismuth, silicon, boron and manganese is melted at temperatures greater than 900°C.

As discussed above, all of the colored compositions disclosed by these patent publications and co-pending applications differ in certain critical aspects from the novel compositions disclosed herein. In particular, ceramic color layer-attached glass plate using (Fe,Mn)₂O₃ -containing ceramic color composition shows sinterability issues (JP 2001-89189 A). Iron sulfide colored glass provides poor optical properties (US 5,710,081 A). FeO, Selenium and CoO colored glass or glasses are grey but not black (EP 0 482 535 B1).

To summarize the state of the art does not present a colored glass frit that enables a black decoration with a transmittance of 1 to < 8 % (or even < 1%) at low layer thicknesses usable for decoration purpose (in particular between 0.5 and 25 µm, more preferred between 0.5 and 10 µm, more preferred between 0.5 and 8 µm) and Haze 5 to < 100.

### Brief Summary of the Invention

One object of the present invention is to provide a colored glass frit that can be applied for decoration of glass/glass ceramic to obtain a durable coating with good opacity.

The colored glass frit can be obtained by adding transition metal ions in such a composition to create an Ilmenite solid solution as the crystal system, represented by the formula Fe₁₋ₓMₓTiO₃ (M = Mn, Mg, Ni, Co, Zn, Cu, Cr, or a combination of two or more thereof) within the final color layer after crystallization of the produced glass frit. Optionally, the colored glass frit composition contains oxides such as Bi₂O₃, CeO₂, V₂O₅, MoOs with a content of < 2 wt%, more preferably < 1 wt%.

In the context of this description the term Ilmenite solid solution is used. This term is not limited to the idealized formula Fe₁₋ₓMₓTiO₃, but also comprises the Ilmenite related components with other relation of (Fe, M) to Ti, for example Ulvöspinell ((Fe,Mn)₂TiO₄) and/or Ferropseudobrookit ((Fe,Mn)Ti₂O₅).

In order to obtain such crystallites within the final decoration layer, the following processing steps are preferably used:
1) Weighing the selected oxide powders (glass raw materials)
2) Melting under reducing atmosphere
3) Quenching the melt
4) Decoration layers can be produced via different following steps
   a. Crystallization of the quenched material at temperatures preferably between > 500°C and <1000°C; in particular for a time between 0.5 and 12 hours. The heating rates are preferably in a range of from 2 to 10 K/min
   b. Milling of the crystallised glass to grain sizes between 0.35 and 5 µm, more preferred between 0.5 and 3 µm, more preferred between 1 and 1.5 µm
   c. Preparation of a color paste by adding screen printing medium
   d. Application via e.g. screen printing
   e. During burn in of the decoration layer at preferred temperatures between 400 and 1000°C (more preferred 650 - 950 °C) the crystallized glass melts but keeps its colored crystallites and as such leaves as result a colored decoration layer.

In such embodiments, the glass ceramic-material of the invention is obtained in step 4a. The glass-ceramic frit is obtained by the milling step 4b.

A different way to obtain black glass frit usable for decoration layers according to alternative embodiments of the invention is as follows:
a. Milling of the pristine glass to grain sizes preferably between 0.35 and 5 µm, more preferred between 0.5 and 3 µm, more preferred between 1 and 1.5 µm
b. Preparation of a color paste by adding screen printing medium
c. Application via e.g. screen printing
d. During burn in of the decoration layer at temperatures preferably between 400 and 1000°C (more preferred 650 - 950 °C) the glass melts, crystallizes and leaves as result a colored decoration layer.

In any case, the crystal content is always kept < 100 mass % in order to maintain the original glass properties and allow further processing of the heat treated glass towards glass frit and decoration production. The further processing in particular includes firing of glass frit at production.

The main advantages of Ilmenite - based glass or glass-ceramic frits of the current invention can be summarized as follows.

Colored glass frit or frits containing low content of Fe₁₋ₓMₓTiO₃ crystal system provide transmission < 1 to <8% and Haze 5 to < 100, in particular in particular at a sample thickness between 0.5 and 25 µm, more preferred between 0.5 and 10 µm, more preferred between 0.5 and 8 µm. Glass, or crystallizing or glass-ceramic frits containing Fe₁₋ₓMₓTiO₃ provide transmission < 1 to 5% and Haze 5 to < 100, in particular at a sample thickness between 0.5 and 25 µm, more preferred between 0.5 and 10 µm, more preferred between 0.5 and 8 µm.

Currently, there is no decoration solution for transmission < 5% or < 8% and also Haze < 30. The present invention provides a replacement for organic based color which is very expensive. All pigment containing coatings provide Haze > 50 or > 80.

Colored glass frit, which is partially crystallized, keeps its low softening temperature (in particular < 650°C).

Coating containing such a glass frit can be fired at advantageous production conditions (in particular at >550°C and/or < 700°C).

Coating containing such a glass frit preferably provides optical density of > 1.91.

Possible applications of such a colored glass frit range from decoration of soda lime glass, Borofloat^{®} glass as well as glass ceramics towards application as glass sealings and so on.

### Detailed Description of the Invention

In one aspect, the present invention relates to a glass-ceramic material comprising a glass phase in a proportion of at least 80.0 wt.-% and a crystalline phase in a proportion of at least 0.1 wt.-%, wherein the crystalline phase comprises a main crystal phase in a proportion of more than 50 wt.-% as compared to the total weight of the crystalline phase. In some embodiments, the main crystal phase comprises crystallites from the Fe₂O₃-TiO₂-MnO₂ system.

In some embodiments, the proportion of the glass phase is in a range of from 80.0 wt.-% to 99.9 wt.-%, for example from 82.5 wt.-% to 99.5 wt.-%, from 85.0 wt.-% to 99.0 wt.-%, from 87.5 wt.-% to 98.0 wt.-%, or from 90.0 wt.-% to 97.0 wt.-%. The proportion of the glass phase may in particular be at least 80.0 wt.-%, at least 82.5 wt.-%, at least 85.0 wt.-%, at least 87.5 wt.-%, or at least 90.0 wt.-%. The proportion of the glass phase may in particular be at most 99.9 wt.-%, at most 99.5 wt.-%, at most 99.0 wt.-%, at most 98.0 wt.-%, or at most 97.0 wt.-%.

In some embodiments, the proportion of the crystalline phase is in a range of from 0.1 wt.-% to 20.0 wt.-%, for example from 0.2 to 15.0 wt.-%, from 0.5 to 12.5 wt.-%, from 1.0 to 10.0 wt.-%, from at least 1.5 wt.-% to 8.0 wt.-%, or from 2.0 to 6.0 wt.-%. The proportion of the crystalline phase may in particular be at least 0.1 wt.-%, at least 0.2 wt.-%, at least 0.5 wt.-%, at least 1.0 wt.-%, at least 1.5 wt.-%, or at least 2.0 wt.-%. The proportion of the crystalline phase may in particular be at most 20.0 wt.-%, at most 15.0 wt.-%, at most 12.5 wt.-%, at most 10.0 wt.-%, at most 8.0 wt.-%, or at most 6.0 wt.-%.

In some embodiments, the proportion of the main crystal phase is more than 50 wt.-%, in particular at least 60 wt.-%, at least 70 wt.-%, at least 80 wt.-%, at least 90 wt.-%, at least 95 wt.-%, at least 99 wt.-%, at least 99.9 wt.-% or even 100 wt.-% as compared to the total weight of the crystalline phase. In some embodiments the crystalline phase may consist of the main crystal phase. Thus, the main crystal phase may be the only crystal phase.

In some embodiments, the main crystal phase comprises or consists of crystallites from the Fe₂O₃-TiO₂-MnO₂ system. In some embodiments, the main crystal phase comprises or consists of (Fe,Mn)TiO₃ crystallites or (Fe,Mn)TiO₄ crystallites or mixtures thereof.

In some embodiments, the main crystal phase comprises or consists of crystallites of the formula Fe₁₋ₓMₓTiO₃, wherein M is selected from the group consisting of Mn, Mg, Ni, Co, Zn, Cu, Cr and combinations of two or more thereof. Preferably, M is selected from the group consisting of Mn, Mg and combinations thereof. Particularly preferred, M is Mn. In some embodiments, x is in a range of from 0 to 0.80. Preferably, x is >0. The component M is advantageously used to adjust the color of the glass-ceramic material. It was observed that for example the inclusion of Mn and/or Mg results in a deep black color impression. The overall named components M can contribute in a similar way and/or also might provide a color shift compared to the pure Ilmenite crystal phase.

In some embodiments, the average crystal size of the crystallites is in a range of from 0.01 to 5.0 µm, for example from 0.02 to 4.0 µm, from 0.05 to 3.0 µm, from 0.10 to 2.0 µm, from 0.15 to 1.5 µm, from 0.20 to 1.0 µm, or from 0.25 to 0.75 µm. The average crystal size of the crystallites may for example be at least 0.01 µm, at least 0.02 µm, at least 0.05 µm, at least 0.10 µm, at least 0.15 µm, at least 0.20 µm, or at least 0.25 µm. The average crystal size of the crystallites may for example be at most 5.0 µm, at most 4.0 µm, at most 3.0 µm, at most 2.0 µm, at most 1.5 µm, at most 1.0 µm, or at most 0.75 µm.

In some embodiments, the starting glass and/or the glass ceramic-material of the present invention comprises TiO₂ in a proportion of 0.03 to 32 wt.-%, for example from 0.5 to 15 wt.-%, from 1.0 to 12 wt.-% or from 2.0 to 10 wt.-%. The proportion of TiO₂ may in particular be at least 0.03 wt.-%, at least 0.5 wt.-%, at least 1.0 wt.-%, or at least 2.0 wt.-%. The proportion of TiO₂ may in particular be at most 32 wt.-%, at most 15 wt.-%, at most 12 wt.-%, or at most 10 wt.-%.

In some embodiments, the starting glass and/or the glass ceramic-material of the present invention comprises Fe₂O₃ in a proportion of 0.07 to 44 wt.-%, for example from 0.5 to 20 wt.-%, from 1.0 to 15 wt.-% or from 2.0 to 12 wt.-%. The proportion of Fe₂O₃ may in particular be at least 0.07 wt.-%, at least 0.5 wt.-%, at least 1.0 wt.-%, or at least 2.0 wt.-%. The proportion of Fe₂O₃ may in particular be at most 44 wt.-%, at most 20 wt.-%, at most 15 wt.-%, or at most 12 wt.-%.

In some embodiments, the starting glass and/or the glass ceramic-material of the present invention comprises MnO₂ in a proportion of 0.03 to 25 wt.-%, for example from 0.5 to 15 wt.-%, from 1.0 to 10 wt.-%, or from 1.5 to 7.5 wt.-%. The proportion of MnO₂ may in particular be at least 0.03 wt.-%, at least 0.5 wt.-%, at least 1.0 wt.-%, or at least 2.0 wt.-%. The proportion of MnO₂ may in particular be at most 25 wt.-%, at most 15 wt.-%, at most 10 wt.-%, or at most 7.5 wt.-%.

In some embodiments, the starting glass and/or the glass ceramic-material of the present invention comprises the following components in the indicated amounts (in % by weight):

| **Component** | **Proportion (%by weight)** |
|---|---|
| SiO₂ | 1-70 |
| B₂O₃ | 0.4-35 |
| Al₂O₃ | 0.03-20 |
| Bi₂O₃ | 0-20 |
| P₂O₅ | 0-10 |
| Li₂O | 0-30 |
| Na₂O | 0-30 |
| K₂O | 0-30 |
| MgO | 0-25 |
| CaO | 0-25 |
| SrO | 0-25 |
| ZnO | 0-30 |
| TiO₂ | 0.03-32 |
| ZrO₂ | 0-10 |
| MnO₂ | 0.03-25 |
| Fe₂O₃ | 0.07-44 |
| SnO₂ | 0-2 |
| F | 0-2 |
| Reducing Agent | >0-2 |
| Sum RO | 0-25 |
| Sum R₂O | 0-30 |

The term RO indicates the alkaline earth metal oxides MgO, CaO, SrO, BaO. The term R₂O indicates the alkali metal oxides Li₂O, Na₂O, K₂O.

In some embodiments, the starting glass and/or the glass ceramic-material of the present invention comprises the following components in the indicated amounts (in % by weight):

| **Component** | **Proportion (%by weight)** |
|---|---|
| SiO₂ | 20-65 |
| B₂O₃ | 5-25 |
| Al₂O₃ | 0.5-15 |
| Bi₂O₃ | 0-20 |
| P₂O₅ | 0-5 |
| Li₂O | 0-10 |
| Na₂O | 0-15 |
| K₂O | 0-15 |
| MgO | 0-5 |
| CaO | 0-5 |
| SrO | 0-5 |
| ZnO | 0-25 |
| TiO₂ | 0.5-15 |
| ZrO₂ | 0-5 |
| MnO₂ | 0.5-15 |
| Fe₂O₃ | 0.5-20 |
| SnO₂ | 0-1 |
| F | 0-1 |
| Reducing Agent | 0.5-1.5 |
| Sum RO | 0-10 |
| Sum R₂O | 0.5-20 |

In some embodiments, the starting glass and/or the glass ceramic-material of the present invention comprises the following components in the indicated amounts (in % by weight):

| **Component** | **Proportion (%by weight)** |
|---|---|
| SiO₂ | 25-60 |
| B₂O₃ | 10-20 |
| Al₂O₃ | 1-10 |
| Bi₂O₃ | 0-20 |
| P₂O₅ | 0-2 |
| Li₂O | 0-5 |
| Na₂O | 0-10 |
| K₂O | 0-10 |
| MgO | 0-2 |
| CaO | 0-2 |
| SrO | 0-2 |
| ZnO | 0-20 |
| TiO₂ | 1-12 |
| ZrO₂ | 0-2 |
| MnO₂ | 1-10 |
| Fe₂O₃ | 1-15 |
| SnO₂ | 0-1 |
| F | 0-1 |
| Reducing Agent | 0.5-1.5 |
| Sum RO | 0-5 |
| Sum R₂O | 1-15 |

The glass-ceramic material of the invention is obtainable by ceramization of suitable starting glasses. The composition of the starting glasses is not substantially changed by the ceramization. Therefore, the starting glasses may have substantially the same compositions indicated above with respect to the glass-ceramics. In one aspect, the present invention relates to respective starting glasses.

As the glass-ceramic materials of the present invention have a high proportion of glass phase, properties such as density, glass transition temperature Tg, softening temperature EW (temperature at 10^{7.6} dPas), and coefficient of thermal expansion (CTE, 20-300 °C) are essentially the same in the glass-ceramic materials and in the starting glasses. In some embodiments, the starting glasses and/or the glass-ceramic materials have a density in the range of from 2.0 to 4.0 g/cm³, for example from 2.2 to 3.5 g/cm³. In some embodiments, the starting glasses and/or the glass-ceramic materials have a glass transition temperature Tg in a range of from 400°C to 600°C, for example from 450°C to 550°C. In some embodiments, the starting glasses and/or the glass-ceramic materials have a softening temperature EW in a range of from 450°C to 650°C, for example from 500°C to 600°C, such as from 500°C to 560°C or from 560°C to 600°C. In particular, the softening temperature EW may be at most 650°C, at most 600°C, or at most 560°C. In some embodiments, the starting glasses and/or the glass-ceramic materials have a CTE (20°C; 300°C) in a range of from 4.0 to 9.0 ppm/K, for example from 4.5 to 8.0 ppm/K.

In one aspect, the present invention relates to a glass-ceramic frit comprising or consisting of grains of glass-ceramic material, in particular comprising or consisting of grains of the glass-ceramic material of the present invention. A glass-ceramic frit is in particular a glass-ceramic material that is present in powdered form. In some embodiments, the particle size d50 of the grains is in a range of from 0.10 to 10 µm, for example from 0.20 to 7.5 µm, from 0.35 to 5.0 µm, from 0.50 to 3.0 µm, or from 1.0 to 1.5 µm. The particle size d50 of the grains may for example be at least 0.10 µm, at least 0.20 µm, at least 0.35 µm, at least 0.50 µm, or at least 1.0 µm. The particle size d50 of the grains may for example be at most 10 µm, at most 7.5 µm, at most 5.0 µm, at most 3.0 µm or at most 1.5 µm.

In one aspect, the present invention relates to a paste comprising a glass-ceramic frit (in particular the glass-ceramic frit of the present invention) and an organic medium. The organic medium may in particular comprise or consist of one or more glycol ethers, in particular 2-(2-butoxyethoxy)ethanol and/or 2-butoxyethanol. The organic medium may for example comprise or consist of 50-75 Vol.-% 2-(2-butoxyethoxy)ethanol and 20-30 Vol.-% 2-butoxyethanol.

The viscosity of the paste is adjusted as required.

In some embodiments, the weight ratio of the glass-ceramic frit to the organic medium in the paste is in a range of from 10:10 to 10:1, for example from 10:8 to 10:2 or from 10:6 to 10:3.

In one aspect, the present invention relates to a layer composite comprising or consisting of a glass or glass-ceramic substrate layer and an enamel coating layer. In some embodiments, the enamel coating layer comprises or consists of or is obtainable from a paste comprising a glass-ceramic material (in particular the glass-ceramic material of the present invention) and/or a glass-ceramic frit (in particular the glass-ceramic frit of the present invention), wherein the paste further comprises an organic medium. In particular, the enamel coating layer comprises or consists of or is obtainable from the paste of the present invention.

In some embodiments, the substrate comprises or consists of a soda lime glass (in particular a float soda lime glass), or a borosilicate glass (in particular a Borofloat^{®} glass). The thickness of the substrate may for example be in a range of from 0.3 mm to 20 mm, in particular from 0.5 to 15 mm, from 1.0 to 10 mm, or from 2.0 to 8.0 mm. The substrate may for example be a composite glass comprising or consisting of two glass panes that are connected by a polymeric interlayer, in particular a PVB (polyvinyl butyral) interlayer. The substrate may for example be a windscreen, in particular a windscreen having two glass panes with a thickness of 2.1 mm each and a PVB interlayer having a thickness of 0.76 mm.

In some embodiments, the enamel coating layer is obtainable by coating the substrate with the paste (for example via a screen-printing method) and subsequent firing of the coated substrate. The firing may in particular comprise temperatures in a range of from 400°C to 1000°C, for example from 650°C to 950°C, from 650°C to 850°C, or from 650°C to 750°C.

In some embodiments, the thickness of the enamel coating layer is in a range of from 0.1 to 30 µm, for example from 0.5 to 25 µm, from 1.0 to 15 µm, from 2.0 to 12 µm, from 5.0 to 10 µm, or from 6.0 to 8.0 µm. The thickness of the enamel coating layer may for example be at least 0.1 µm, at least 0.5 µm, at least 1.0 µm, at least 2.0 µm, or at least 5.0 µm. The thickness of the enamel coating layer may for example be at most 30 µm, at most 25 µm, at most 15 µm, at most 12 µm, at most 10 µm, or at most 8.0 µm.

In some embodiments, the optical density of the enamel coating layer for light having a wavelength of 400 to 750 nm is at least 0.1, for example at least 0.25, at least 0.5, at least 0.75, at least 1.0, at least 1.25, at least 1.5, at least 1.75, at least 1.85 or at least 1.91, in particular at a thickness of the enamel coating layer as indicated above, for example at a thickness of the enamel coating layer of 7 µm.

In some embodiments, the glass-ceramic material, the glass-ceramic frit, the layer composite and/or the enamel coating layer is characterized by a particular advantageous color impression. The color impression can be determined with the CIELAB color space according to the knowledge of the skilled person, in particular under illumination with illuminant D65, an observation angle of 10°, and a thickness of 7 µm. The thickness may in particular be the thickness of the enamel coating layer. The L* value, the a* value and the b* value of the CIELAB color space may be determined according to the knowledge of the skilled person, in particular using KONICA MINOLTA spectrophotometer CM-700d with the enamel coating layer facing upwards.

The L* coordinate may in particular be in a range of from 1 to 80, from 2 to 80, from 5 to 80, from 10 to 80, from 20 to 80, for example from 30 to 70, from 35 to 60, or from 40 to <57. The L* coordinate may in particular be at least 1, at least 2, at least 5, at least 10, at least 20, at least 30, at least 35, or at least 40. The L* coordinate may in particular be at most 80, at most 70, at most 60, or <57.

The a* coordinate may in particular be in a range of from -15 to 20, for example from -10 to 15, from -5 to 10, or from 0 to 5. The a* coordinate may in particular be at least -15, at least -10, at least -5, or at least 0. The a* coordinate may in particular be at most 20, at most 15, at most 10, or at most 5.

The b* coordinate may in particular be in a range of from 0 to 50, from 0 to 30, from 0 to 25, from 1 to 20, from 2 to 15, or from 5 to 10. The b* coordinate may in particular be at least 0, at least 1, at least 2 or at least 5. The b* coordinate may in particular be at most 50, at most 30, at most 25, at most 20, at most 15, or at most 10.

In some embodiments, the gloss at 60° is in a range of from 1 GU to 70 GU, in particular from 2 GU to 65 GU, from 4 GU to 60 GU, from 5 GU to 55 GU, from 10 GU to 50 GU, from 12 to 45 GU or from 15 to 40 GU. The gloss at 60° may in particular be at least 1 GU, at least 2 GU, at least 4 GU, at least 5 GU, at least 10 GU, at least 12 GU or at least 15 GU. The gloss at 60° may in particular be at most 70 GU, at most 65 GU, at most 60 GU, at most 55 GU, at most 50 GU, at most 45 GU or at most 40 GU. The gloss at 60° may be determined according to the knowledge of the skilled person, in particular by RHOPOINT glossmeter according to ISO 2813, ASTM D523, ASTM D2457, DIN67530, and/or JIS 8741. The gloss is indicated in "gloss units" (GU).

In some embodiments, the enamel coating layer passes the sklerometer test at a force of 10 N, in particular at a thickness of the enamel coating layer in a range of from 5 to 10 µm, such as from 6 to 8 µm, in particular 7 µm. The sklerometer test may be done according to the knowledge of the skilled person, in particular with Elcometer 3092 and 10 N force according to AS3894.4, EN 438-2, and/or ISO 4586-2.

In some embodiments, the transmission of light having a wavelength in a range of from 380 to 740 nm is less than 8%, for example less than 5%, less than 2%, less than 1%, less than 0.5%, less than 0.2, or less than 0.1%, in particular when measured at a reference thickness of the enamel coating layer of 7 µm.

In some embodiments, the haze is in a range of from 5 to <100, for example from 10 to 50, from 15 to 30, or from 20 to 25, in particular when measured at a reference thickness of the enamel coating layer of 7 µm. The haze may in particular be at least 5, at least 10, at least 15 or at least 20. The haze may in particular be less than 100, for example at most 50, at most 30, or at most 25.

That optical parameters (such as the CIELAB parameters, the optical density, the transmission or the haze) are preferably determined at a thickness of the enamel coating layer of 7 µm does not mean that the enamel coating layer of the layer composite of the invention necessarily has such a thickness. The enamel coating layer of the layer composite of the invention may have a thickness of 7 µm, but it does not have to. The thickness of 7 µm simply indicates the preferred reference thickness for optical measurements.

For example, the transmission is dependent on the thickness of the enamel coating layer. Therefore, it is reasonable to provide a reference thickness. For example, the transmission may be 1% at a thickness of a particular enamel coating layer of 7 µm. Nevertheless, the actual thickness of the enamel coating layer of the layer composite of the invention may be 10 µm. Thus, the invention for example also includes layer composites having an enamel coating layer with a thickness of 10 µm, wherein the transmission is 1% at a reference thickness of the enamel coating layer of 7 µm.

In one aspect, the present invention relates to a method for producing a glass-ceramic material (in particular the glass-ceramic material of the present invention) and/or a glass-ceramic frit (in particular the glass-ceramic frit of the present invention). In some embodiments, the method comprises the following steps:
a) Providing a starting glass,
b) Ceramming the starting glass by thermal treatment, in particular at a temperature of from 500°C to 1000°C for a duration of from 1 hour to 12 hours.

The step of providing a starting glass may in particular comprise melting glass raw materials under reducing conditions (in particular reducing atmosphere) and/or quenching the melt. Quenching may in particular comprise fast roller quenching, water or air quenching methods, or combinations of two or more thereof.

In some embodiments, the ceramming temperature is in a range of from 500°C to 1000°C, in particular from 600°C to 950°C, for example from 650°C to 900°C.

In some embodiments, the ceramming time (duration) is in a range of from 0.5 to 12 hours or from 1 to 12 hours, for example from 1.5 to 7.5 hours, or from 2 to 6 hours.

In particular the method of producing a glass-ceramic frit (in particular the glass-ceramic frit of the present invention) further comprises the step of milling the glass-ceramic material. The milling step may in particular be done such that the grains have a particle size d50 in a range of from 0.10 to 10 µm, for example from 0.20 to 7.5 µm, from 0.35 to 5.0 µm, from 0.50 to 3.0 µm, or from 1.0 to 1.5 µm.

In one aspect, the present invention relates to a method for producing a paste comprising a glass-ceramic frit (in particular the glass-ceramic frit of the present invention) and an organic medium. The organic medium may in particular comprise or consist of one or more glycol ethers, in particular 2-(2-butoxyethoxy)ethanol and/or 2-butoxyethanol. The organic medium may for example comprise or consist of 50-75% 2-(2-butoxyethoxy)ethanol and 20-30% 2-butoxyethanol.

The viscosity of the paste can be adjusted for the application needs.

In some embodiments, the weight ratio of the glass-ceramic frit to the organic medium in the paste is in a range of from 10:10 to 10:1, for example from 10:8 to 10:2 or from 10:6 to 10:3.

The method for preparing the paste may in particular comprise the step of mixing the glass-ceramic frit and the organic medium.

In one aspect, the present invention relates to a method for producing a layer composite (in particular the layer composite of the present invention), the method comprising the following steps:
a) Coating a glass or glass-ceramic substrate with a paste comprising a glass-ceramic material (in particular the glass-ceramic material of the present invention) and/or a glass-ceramic frit (in particular the glass-ceramic frit of the present invention), wherein the paste further comprises an organic medium,
b) Heat treating (firing) the coated substrate, in particular at a temperature of from 600°C to 800°C and/or for a duration of from 0.5 to 12 hours.

The heat treatment may also be referred to as firing.

The coating step may in particular include screen printing. The screen mesh size may for example be at least 77 and/or at most 77, in particular 77-55T.

In some embodiments, the firing temperature is in a range of from 400°C to 1000°C, for example from 600°C to 800°C, from 650°C to 950°C, from 650°C to 850°C, or from 650°C to 750°C. The firing temperature may in particular be at least 400°C, at least 500°C, at least 600°C or at least 650°C. The firing temperature may in particular be at most 1000°C, at most 950°C, at most 850°C, at most 800°C, or at most 750°C.

In some embodiments, the firing time (duration) is in a range of from 0.5 to 12 hours, for example from 1 to 9 hours or from 2 to 6 hours.

As described above, the organic medium may in particular comprise or consist of one or more glycol ethers, in particular 2-(2-butoxyethoxy)ethanol and/or 2-butoxyethanol. The organic medium may for example comprise or consist of 50-75% 2-(2-butoxyethoxy)ethanol and 20-30% 2-butoxyethanol.

In some embodiments, the weight ratio of the glass-ceramic frit to the organic medium in the paste is in a range of from 10:10 to 10:1, for example from 10:8 to 10:2 or from 10:6 to 10:3.

In one aspect, the present invention relates to the use of the glass-ceramic material, the glass-ceramic frit and/or the layer composites of the present invention, in particular in home appliance or automotive applications, in particular the decoration of a windscreen.

### Examples

The invention is further illustrated by way of the following examples.

### 1. Production of glass-ceramic material

Mixed raw batch compositions were melted at > 1500°C; < 1650°C for about 30 - 120min under reducing atmosphere, followed by fast cooling of the melt using fast roller quenching, water or air quenching methods. The resulting glass ribbons were then conducted to a ceramization at a ceramming temperature in the range of from 600°C to 850°C.

Glass-ceramic material of the invention was produced from different starting glass compositions and using different ceramming profiles. The different ceramming profiles differed with respect to the ceramming temperature and/or with respect to the ceramming time. The following table provides an overview of examples 1 to 17 by indicating the starting glass composition and the ceramization profile applied thereto.

**Table 1**

| **Ex.** | **1** | **2** | **3** | **4** | **5** | **6** | **7** | **8** | **9** | **10** | **11** | **12** | **13** | **14** | **15** | **16** | **17** |
|---|---|---|---|---|---|---|---|---|---|---|---|---|---|---|---|---|---|
| Glass comp. | A | A | A | A | A | B | C | D | E | B | C | D | E | B | C | D | E |
| Cer. temp. [°C] | 710 | 710 | 850 | 950 | 600 | 710 | 710 | 710 | 710 | 850 | 850 | 850 | 850 | 600 | 600 | 600 | 600 |
| Cer. time [h] | 2 | 2 | 4 | 4 | 6 | 6 | 6 | 6 | 6 | 4 | 4 | 4 | 4 | 6 | 6 | 6 | 6 |

| | | | | | | | | | | | | | | | | | |
|---|---|---|---|---|---|---|---|---|---|---|---|---|---|---|---|---|---|
| "Cer. temp." indicates the ceramming temperature. "Cer. time" indicates the ceramming time. | | | | | | | | | | | | | | | | | |

The starting glass compositions (glass comp.) A, B, C, D and E were as follows (in % by weight):

**Table 2**

| **Component** | **Proportion (%by weight)** | | | | |
|---|---|---|---|---|---|
| | **Comp. A** | **Comp. B** | **Comp. C** | **Comp. D** | **Comp. E** |
| SiO₂ | 51-61 | 32 | 30 | 47 | 45 |
| B₂O₃ | 10-13 | 13 | 13 | 20 | 14 |
| Al₂O₃ | 5-6 | 1 | 1 | 4.5 | 14 |
| Bi₂O₃ | | 18 | 0.1 | 8 | |
| P₂O₅ | | 1 | | | |
| Li₂O | | 0.1 | 0.1 | 4 | 2.5 |
| Na₂O | 1-2 | 3 | 8.5 | 0.1 | |
| K₂O | 8-10 | 2 | 1 | | |
| MgO | | 0.1 | | | 1.5 |
| CaO | | 0.5 | >0 | | 1.5 |
| SrO | | | | | 2 |
| ZnO | | 11 | 23.5 | | 2 |
| TiO₂ | 2-8 | 8 | 9.5 | 5 | 5 |
| ZrO₂ | | 0.1 | 1 | | 1 |
| MnO₂ | 0-6 | 3 | 3.5 | 3.5 | 3.5 |
| Fe₂O₃ | 3-11 | 6 | 7 | 7 | 7 |
| SnO₂ | | 0.5 | | | |
| F | | | 1 | | |
| Reducing Agent | 0.5-1.5 | 1 | 1 | 1 | 1 |

Properties of glass compositions A to E are shown in the following table.

**Table 3**

| **Property** | **Comp. A** | **Comp. B** | **Comp. C** | **Comp. D** | **Comp. E** |
|---|---|---|---|---|---|
| Density [g/cm³] | 2.4-2.6 | 3.2 | | 2.6 | |
| Tg [°C] | 510 | 480 | 490 | | 540 |
| Softening temperature EW (at 10^{7.6} dPas) [°C] | 560-600 | 500-560 | 500-560 | | 560-600 |
| CTE (20; 300 °C) [ppm/K] | 6.2-6.9 | 6.9 | 7.5 | | 4.8 |

### 2. Properties of the glass-ceramic material

The glass-ceramic material obtained as described in the previous section was tested for its properties. In particular, the proportions of the main crystal phase and of the residual glass phase were determined. Furthermore, the crystallites of the main crystal phase and the crystal sizes of the respective crystallites were determined. The results are summarized in the following table.

**Table 4**

| **Ex.** | **1** | **2** | **3** | **4** | **5** | **6** | **7** | **8** | **9** | **10** | **11** | **12** | **13** | **14** | **15** | **16** | **17** |
|---|---|---|---|---|---|---|---|---|---|---|---|---|---|---|---|---|---|
| Main crystal phase [wt.-%] | 4.3 | 4.1 | 3.1 | | 0.2 | 12.2 | 7.5 | 1.1 | 1 | 3 | 12.8 | 8.6 | 3.6 | 8 | 4.9 | 0.8 | 0.6 |
| Glass phase [wt.-%] | | | | | 99.8 | 84.2 | 89.6 | 98.9 | 99 | 97 | 87.2 | 91.4 | 96.4 | 92 | 95.1 | 99.2 | 99.4 |
| Crystal size [µm] | 0.26-0.33 | 0.22-0.28 | 0.65-0.81 | NA | NA | NA | 0.14-0.19 | 0.39-0.63 | NA | 0.25-1.5 | 0.24-0.41 | 1.5-2.4 | NA | NA | NA | NA | NA |

The proportions of the main crystal phase and the glass phase were determined by X-ray diffraction analysis (XRD). The crystal size of the crystallites of the main crystal phase was determined by Scanning Electron microscope Zeiss Leo 1530 SEM at 20KV accelerated voltage. The crystal size range indicates the minimum and maximum values.

For most examples, the proportion of the main crystal phase and the proportion of the glass phase sum up to 100 wt.-%. This means that the main crystal phase was the only crystal phase of the glass-ceramic material. However, for examples 6 and 7 the sum of the proportions of the main crystal phase and of the glass phase was lower than 100 wt.-%. The reason is that there was an additional crystal phase whose proportion was lower than the proportion of the main crystal phase.

The crystallites of the main crystal phase were (Fe,Mn)TiO₃ for examples 1 to 3, 6, 7, and 9 to 14, and (Fe,Mn)TiO₄ for examples 5, 8 and 15 to 17 as determined by X-ray diffraction analysis.

### 3. Production of glass-ceramic frit

The glass-ceramic material was subjected to a milling process so that a powder with a particle size d50 from about 1 to <5 µm was obtained. This powder is also referred to as glass-ceramic frit.

### 4. Coating of substrates

The glass-ceramic frit (the grounded powder described above) was used to prepare a paste for coating substrates. The as prepared paste was then used to print samples via screen-printing method.

Different substrates were coated with a paste comprising the glass-ceramic frit described above and an organic medium. The organic medium was in particular comprising or consisting of one or more glycol ethers, in particular 2-(2-butoxyethoxy)ethanol and/or 2-butoxyethanol. After coating, the coated substrates were heat-treated for obtaining an enamel coating layer.

The following table summarizes details of the substrates, of the coating conditions and of the heat-treatment.

**Table 5**

| **Ex.** | **1** | **2** | **3** | **4** | **5** | **6** | **7** | **8** | **9** | **10** | **11** | **12** | **13** | **14** | **15** | **16** | **17** |
|---|---|---|---|---|---|---|---|---|---|---|---|---|---|---|---|---|---|
| Subs. | float soda lime glass | float soda lime glass | float soda lime glass | float soda lime glass | SLS / Boro | SLS / Boro | SLS / Boro | SLS / Boro | | | | | | SLS / Boro | SLS / Boro | SLS / Boro | SLS / Boro |
| Past. ratio | 10 : 5.51 | 10 : 5.51 | 10 : 5.51 | 10 : 5.51 | 10 : 5.51 | 10 : 5.51 | 10 : 5.51 | 10 : 5.51 | 10 : 5.51 | | | | | 10 : 5.51 | 10 : 5.51 | 10 : 5.51 | 10 : 5.51 |
| Scr. mesh size | 77-55T | 77-55T | 77-55T | 77-55T | 77-55T | 77-55T | 77-55T | 77-55T | 77-55T | 77-55T | 77-55T | 77-55T | 77-55T | 77-55T | 77-55T | 77-55T | 77-55T |

The pasting ratio (Past. ratio) indicates the weight ratio of the glass-ceramic frit to the organic medium in the paste used for coating the substrate. The screen mesh size (scr. mesh size) indicates the mesh size of the screen used for coating the substrate with the paste. For the data underlying the tables, a burn-in temperature (burn-in temp.) of 680 °C was applied during heat-treatment for obtaining the enamel coating layer.

After the heat-treatment, a layer composite comprising a substrate layer and an enamel coating layer was obtained.

### 5. Properties of the layer composite

Optical and mechanical properties of the obtained layer composite were tested. The results are summarized in the following table.

**Table 6**

| **Ex.** | **1** | **2** | **3** | **4** | **5** | **6** | **7** | **8** | **9** | **10** | **11** | **12** | **13** | **14** | **15** | **16** | **17** |
|---|---|---|---|---|---|---|---|---|---|---|---|---|---|---|---|---|---|
| Ena. thick. [µm] | 6-8 | 6-8 | 6-8 | 6-8 | 6-8 | 6-8 | 6-8 | 6-8 | 6-8 | NA | NA | NA | NA | 6-8 | 6-8 | 6-8 | 6-8 |
| Opt. dens. | 1.13 | 1.11 | 0.99 | 0.49 | 0.17 | 1.91 | 0.9 | 0.62 | 0.82 | NA | NA | NA | NA | 1.03 | 0.65 | 0.29 | 0.27 |
| L*a*b* | 41.02 / 2.67 / 7.84 | 40.75 / 3.1 / 8.24 | 40.09 / 2.45 / 6.73 | 45.75 / 4.43 / 16.03 | 51.35 / 6.2 / 21.22 | 33.85 / 1.13 / -0.05 | 37.42 / 12.95 / 9.27 | 39.92 / 14 / 15.38 | 43.76 / 11.19 / 19.1 | NA | NA | NA | NA | 34.26 / 12.82 / 7.08 | 41.41 / 15.83 / 21.92 | 62.48 / 5.21 / 26.73 | 65.8 / 7.11 / 41.85 |
| Gloss (60°) [GU] | 4.70 | 4.51 | 8.27 | 6.93 | 15.67 | 13.59 | 39.55 | 26.19 | 26.33 | NA | NA | NA | NA | 29.8 | 39.12 | 34.19 | 46.7 |

The optical density (opt. dens.) was determined by transmission densitometer model 361T manufactured by X-Rite according to ANSI PH2. 19-1986 with the enamel coating layer facing upwards.

The L* value, the a* value and the b* value of the CIELAB color space were determined using KONICA MINOLTA spectrophotometer CM-700d according to the knowledge of the skilled person with the enamel coating layer facing upwards.

The gloss at 60° was determined by RHOPOINT glossmeter according to ISO 2813, ASTM D523, ASTM D2457, DIN67530, JIS 8741. The gloss is indicated in "gloss units" (GU).

The results show that a durable coating with good opacity was obtained.

## Claims

1. A glass-ceramic frit comprising grains of a glass-ceramic material comprising a glass phase in a proportion of at least 80.0 wt.-% and a crystalline phase in a proportion of at least 0.1 wt.-%, wherein the crystalline phase comprises a main crystal phase in a proportion of more than 50 wt.-% as compared to the total weight of the crystalline phase, wherein the main crystal phase comprises an Ilmenite solid solution with crystallites of the idealized formula Fe₁₋ₓMₓTiO₃ or of formula (Fe₁₋ₓ,Mₓ)₂TiO₄ or (Fe₁₋ₓ,Mₓ)Ti₂O₅, wherein M is selected from the group consisting of Mn, Mg, Ni, Co, Zn, Cu, Cr and combinations of two or more thereof, wherein x is in a range of from 0 to 0.80.

2. The glass-ceramic frit according to claim 1, wherein M is selected from the group consisting of Mn, Mg and combinations thereof.

3. The glass-ceramic frit of at least one of the preceding claims, wherein the grains have a particle size d50 in a range of from 0.35 µm to 5.0 µm.

4. A layer composite comprising a glass or glass-ceramic substrate layer and an enamel coating layer, wherein the enamel coating layer is obtainable from a paste comprising the glass-ceramic frit of at least one of the preceding claims, wherein the paste further comprises an organic medium.

5. The layer composite of claim 4, wherein the thickness of the enamel coating layer is in a range of from 1.0 to 30.0 µm.

6. The layer composite of at least one of claims 4 and 5, wherein the optical density is at least 0.1 for light having a wavelength of 400 - 750 nm.

7. The layer composite of at least one of claims claim 4 to 6, wherein the L* coordinate of the in CIELAB color space is in a range of from 1 to 80, preferably 20 to 80, wherein the a* coordinate of the in CIELAB color space is in a range of from -15 to 20, and/or wherein the b* coordinate of the in CIELAB color space is in a range of from 0 to 25 when measured at a reference thickness of the enamel coating layer of 7 µm.

8. The layer composite of at least one of claims 4 to 7, wherein the gloss at 60° is in a range of from 1 GU to 70 GU.

9. The layer composite of at least one of claims 4 to 8, wherein the transmission of light having a wavelength in a range of from 380 to 740 nm is less than 8% when measured at a reference thickness of the enamel coating layer of 7 µm.

10. The layer composite of at least one of claims 4 to 9, wherein the haze is in a range of from 5 to <100.

11. A method for producing the glass-ceramic frit of at least one of claims 1 to 3, the method comprising the following steps:
a) Providing a starting glass,
b) Ceramming the starting glass by thermal treatment at a temperature of from 500°C to 1000°C for a duration of from 1 hour to 12 hours,
c) Milling the glass-ceramic material.

12. A method for producing the layer composite of at least one of claims 4 to 10, the method comprising the following steps:
a) Coating a glass or glass-ceramic substrate with a paste comprising the glass-ceramic frit of at least one of claims 1 to 3, wherein the paste further comprises an organic medium,
b) Heat treating the coated substrate at a temperature of from 600°C to 800°C for a duration of from 0.5 to 12 hours.

13. Use of the glass-ceramic frit of at least one of claims 1 to 3 and/or the layer composite of at least one of claims 4 to 10 in home appliance or automotive applications, in particular the decoration of a windscreen.
